# FASCICULE DE BREVET EUROPEEN

(11) **EP 4 151 467 B1**
(45) Date de publication et mention de la délivrance du brevet: **18.06.2025**
(21) Numéro de dépôt: 22196217.8
(22) Date de dépôt: 16.09.2022
(51) Int. Cl.: B60Q 1/50, F21S 41/14, F21S 41/20, F21S 41/40, G02B 3/00, G02B 19/00, G03B 21/00, G03B 21/14, G03B 29/00, B60K 35/00, G03B 21/62, B60R 13/04

(54) **PANNEAU DE CARROSSERIE COMPRENANT UN DISPOSITIF D'AFFICHAGE D'IMAGES**
KAROSSERIEPANEEL, DAS EINE BILDANZEIGEVORRICHTUNG UMFASST
BODY PANEL COMPRISING A DEVICE FOR DISPLAYING IMAGES

(30) Priorité: 17.09.2021 FR 2109816
(43) Date de publication de la demande: 22.03.2023
(73) Titulaire: OPmobility SE, 69007 Lyon (FR)
(72) Inventeur: CORNET, Olivier, 01150 SAINTE-JULIE (FR); KHAYAT, Issam, 01150 SAINTE-JULIE (FR); YILMAZ, Marie, 01150 SAINTE-JULIE (FR)
(74) Mandataire: LLR

(56) Documents cités:
- EP-B1- 3 279 135
- DE-A1- 102018 206 087
- US-A1- 2017 297 502

## Description

L'invention concerne les panneaux de carrosserie de véhicule automobile. On entend par panneau de carrosserie un panneau formant l'habillage extérieur d'un véhicule automobile. On peut par exemple citer une peau de pare-chocs.

On note depuis plusieurs années l'apparition de véhicules aptes à afficher une image sur leur carrosserie. L'affichage d'images sur la carrosserie a avant tout une visée esthétique à en juger par les concepts cars présentés dans les différents salons automobile. Cependant, l'affichage d'images sur la carrosserie d'un véhicule peut avoir d'autres intérêts (signalisation, sécurité, etc.).

Les panneaux de carrosserie pouvant afficher des images sont classiquement munis d'écrans aptes à diffuser une image. Il peut s'agir d'écrans de type LED (pour light-emitting diode, diode électroluminescente en français) ou OLED (pour organic light-emitting diode, diode électroluminescente organique en français). Ces écrans ont une certaine souplesse leur permettant d'être apposés sur des panneaux de carrosserie qui sont généralement plus ou moins courbés. Les écrans apposés sur les panneaux de carrosserie génèrent et diffusent alors des images visibles depuis l'extérieur du véhicule.

Cependant, cette solution d'affichage via des écrans LED ou OLED présente plusieurs inconvénients.

Tout d'abord, la souplesse des écrans est limitée. Dès lors, il n'est pas possible d'apposer un écran sur un véhicule dont le style (c'est-à-dire la forme des surfaces de carrosserie) présenterait des courbures trop importantes. La déformation des écrans peut également conduire à une déformation des images affichées par ces derniers.

De plus, la pose d'écrans de type LED sur des panneaux de carrosserie conduit à la production de pièces de carrosserie ayant un coût élevé.

Enfin, l'ensemble formé par les panneaux de carrosserie et les écrans deviennent plus fragiles. Le remplacement des écrans en cas de dommages, voire des panneaux de carrosserie entiers si la dissociation entre les deux n'est pas possible, présente dès lors un coût élevé. Une impossibilité de dissociation, par exemple en cas d'adhésivage pour que l'écran épouse la forme du panneau de carrosserie, peut également poser un problème en termes d'éco-conception concernant un démontage puis un recyclage des composants du panneau endommagé.

Des projecteurs, par exemple des projecteurs DLP (pour Digital Light Processing) ou LCD (pour Liquid Crystal Display) peuvent également être utilisés sur des véhicules automobiles, par exemple pour projeter une image au sol depuis le véhicule automobile. Cependant, ces derniers doivent être assez compacts pour pouvoir être intégrés dans un véhicule automobile et cela limite leur puissance lumineuse.

Le document US 2017/297502 divulgue un ensemble d'un panneau de carrosserie de véhicule automobile et d'un dispositif de projection d'images selon le préambule de la revendication 1.

Un but de l'invention est donc de fournir un panneau de carrosserie apte à afficher des informations lumineuses à sa surface, informations visibles depuis l'extérieur du véhicule, le panneau de carrosserie pouvant être produit à des coûts inférieurs à ceux de l'art antérieur et présentant une robustesse satisfaisante au regard de l'exposition des panneaux de carrosserie aux chocs.

A cet effet, l'invention a pour objet un ensemble d'un panneau de carrosserie de véhicule automobile et d'un dispositif de projection d'images, le panneau de carrosserie comprenant :
- un corps principal réalisé en matière plastique transparente, et
- un film diffusant rapporté au corps principal de manière à être traversé par l'image projetée par le dispositif de projection d'images,
le dispositif de projection d'images étant agencé pour faire apparaitre au moins une image sur une face externe du panneau de carrosserie en la projetant sur une face interne du panneau de carrosserie, le dispositif de projection d'images comprenant une lentille freeform.

On entend par transparent une matière ayant une transmission lumineuse comprise entre 80% et 99% est transparent.

L'utilisation d'un film diffusant permet d'avoir une surface de réception des rayons lumineux adaptée qui va élargir l'angle de diffusion de l'image projetée par le dispositif de projection. Cette dernière sera visible sur la surface extérieure du panneau de carrosserie depuis un angle d'observation de l'extérieur du véhicule automobile plus important. De plus, combiner le film diffusant avec un matériau transparent formant le panneau de carrosserie permet de laisser passer un maximum de flux lumineux dans le but d'obtenir un motif lumineux homogène, localisé et défini.

L'utilisation d'une lentille freeform conçue pour afficher une image particulière combinée à une source de lumière permet de concevoir une solution simple, peu coûteuse et permettant d'obtenir une puissance lumineuse satisfaisante tout en étant compacte (contrairement à d'autres techniques de projection utilisées dans le domaine automobile et pour lequel cela n'est pas possible).

Enfin, un des avantages de l'utilisation d'une lentille freeform réside dans le fait que la forme de sa surface de sortie est modélisée en fonction de la forme de l'image à afficher sur la face externe d'un panneau de carrosserie. Dès lors, il est possible, en fonction de la forme du panneau de carrosserie (qui, par exemple pour les raisons de style, peut prendre une forme particulière), de générer une image déformée en sortie de lentille freeform afin que cette dernière prenne la forme voulue lors de son affichage sur la face externe d'un panneau de carrosserie.

Suivant d'autres caractéristiques optionnelles du panneau de carrosserie prises seules ou en combinaison :
- le corps principal est réalisé dans un matériau choisi parmi les matériaux suivants : du Polycarbonate (PC), du Polyméthacrylate de Méthyle (PMMA), de l'Acrylonitrile Butadiène Styrène translucide (ABS), de l'Acrilonitrile Styrène Acrylate (ASA), du styrène acrilonitrile (SAN), un mélange d'Acrilonitrile Styrène Acrylate et de Polycarbonate, un mélange de Polycarbonate et de Polytéréphtalate d'Ethylène), ou encore de polyoléfine amorphe tels que cyclo-oléfines copolymères (COC) ou cyclo-oléfines-polymères (COP).
- le dispositif de projection d'image comprend une source de lumière agencée pour projeter de la lumière à travers la lentille freeform ;
- la source de lumière comprend au moins une LED ;
- la lentille freeform est réalisé en polycarbonate ;
- le film diffusant présente une largeur à mi-hauteur comprise entre 40° et 90°, de préférence entre 60° et 90° ;
- le film diffusant est fixé par adhésivage sur le corps principal du panneau de carrosserie ;
- la distance entre le corps principal et le dispositif de projection d'images est comprise entre 5 millimètres et 400 millimètres, de préférence entre 35 millimètres et 200 millimètres ;
- le corps principal est recouverte d'un primaire, d'une couche de peinture colorée et d'un vernis ;
- le primaire et le vernis sont transparents ;
- la peinture colorée présente un facteur de Haze compris entre 30% et 75% ;
- la peinture colorée présente une transmission lumineuse comprise entre 10% et 50%, de préférence comprise entre 20% et 40%, de préférence sensiblement égale à 30% ; et
- le film diffusant est au moins partiellement sérigraphié.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un véhicule automobile comprenant un panneau de carrosserie selon l'invention ;
[Fig. 2] la figure 2 est une vue en coupe d'un ensemble selon l'invention ;
[Fig. 3] la figure 3 est une vue en coupe d'un ensemble selon une première variante de l'invention ; et
[Fig. 4] la figure 4 est une vue en coupe d'un ensemble selon une seconde variante de l'invention.

### Description détaillée

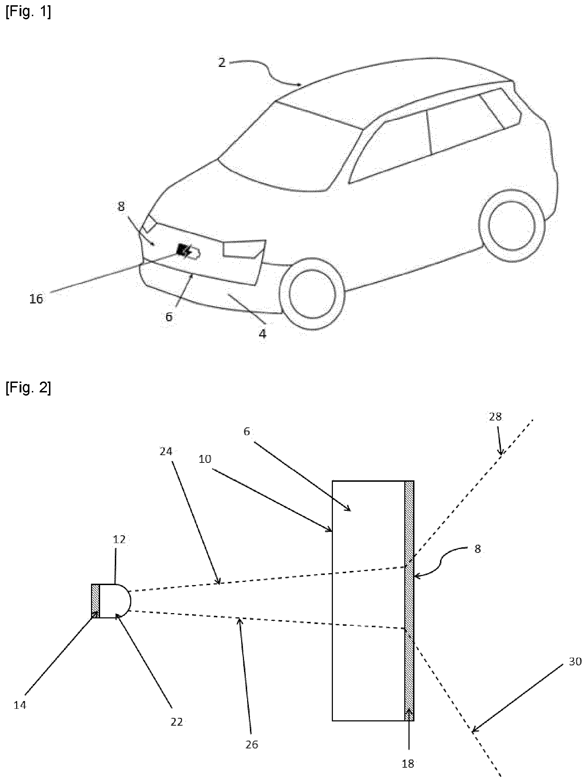

La figure 1 représente un véhicule automobile 2 comprenant un panneau de carrosserie 4, par exemple une peau de pare-chocs, composé au moins en partie d'un corps principal 6. Le panneau de carrosserie 4 est apte à afficher sur sa face externe 8 une image projetée sur sa face interne 10. On entend par face externe 8 la face du panneau de carrosserie 4 tournée vers l'extérieur du véhicule, la face interne 10 étant la face du panneau de carrosserie 4 opposée à la face externe.

Afin de pouvoir afficher sur la face externe 8 du panneau de carrosserie 4 une image 16, par exemple un logo de constructeur ou encore un motif tel que celui présenté sur la figure 1, projetée sur la face interne 10 dudit panneau de carrosserie 4, le corps principal 6 est transparent. Pour cela, le corps principal 6 peut par exemple être réalisé en Polycarbonate (PC), en Polyméthacrylate de Méthyle (PMMA), en Acrylonitrile Butadiène Styrène translucide (ABS), en Acrilonitrile Styrène Acrylate (ASA), en styrène acrilonitrile (SAN), en un mélange d'Acrilonitrile Styrène Acrylate et de Polycarbonate, en un mélange de Polycarbonate et de Polytéréphtalate d'Ethylène), ou encore en polyoléfine amorphe tels que cyclo-oléfines copolymères (COC) ou cyclo-oléfines-polymères (COP).

La définition de la transparence est donnée plus haut. Le but est ici de s'assurer que le corps principal 6 laisse passer la lumière émise par un dispositif de projection d'images 12. Le corps principal 6 est de manière préférentielle réalisé en polycarbonate transparent ayant une transmission comprise entre 80% et 99%.

Comme expliqué auparavant, un tel affichage d'image à distance a de nombreux avantages :
- l'ensemble formé du panneau de carrosserie 4 et du dispositif de projection d'images 12 conserve sa robustesse. Cet ensemble est moins sensible aux impacts car la source d'émission de l'image 16 est face à la face interne 10 du panneau de carrosserie 4 et à distance de ce dernier, la distance entre la source d'émission de l'image 16 et le panneau de carrosserie 4 pouvant être déterminée en fonction de la déformation du panneau de carrosserie 4 afin de placer la source d'émission d'images assez loin pour ne pas être endommagée par la déformation du panneau de carrosserie (jusqu'à un certain degré de déformation de ce dernier),
- l'affichage d'image est possible même en cas de déformation du panneau de carrosserie 4 car la source n'est pas obligatoirement endommagée lors d'un choc, contrairement à un écran lumineux fixé directement sur le panneau de l'art antérieur,
- une projection directe d'une image sur un panneau de carrosserie permet de réaliser des panneaux de carrosserie pouvant avoir une grande liberté de forme, contrairement à l'art antérieur dans lequel un panneau de carrosserie ne peut pas comprendre des courbes trop importantes du fait de la faible flexibilité des écrans lumineux, et
- il est possible, lors de la conception de la lentille freeform, de tenir compte de la forme particulière du panneau de carrosserie 4 afin d'adapter la forme de l'image 16 en sortie du dispositif de projection d'images 12 afin que cette dernière s'affiche correctement sur la face externe 8 du panneau de carrosserie 4.

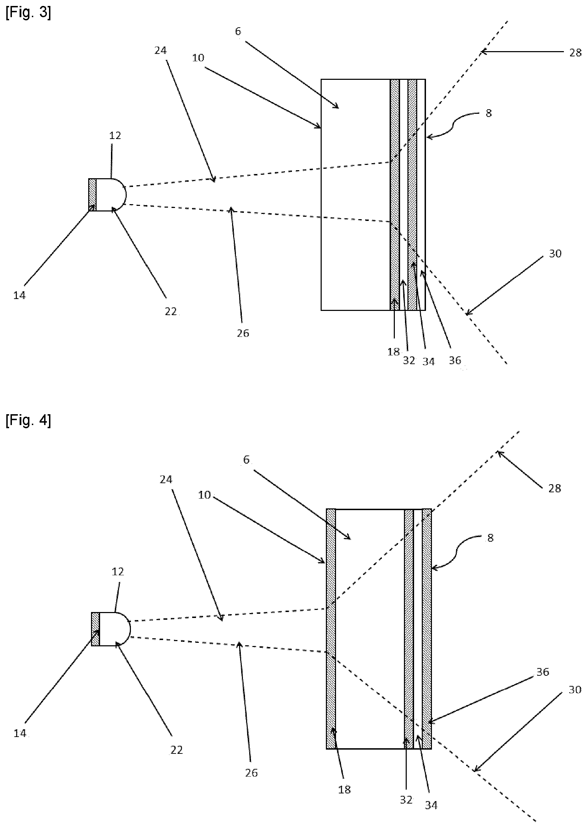

L'image 16 est projetée par le dispositif de projection d'images 12 (représenté sur la figure 2 et la figure 3) situé à distance de la face interne 10 du panneau de carrosserie 4, en étant par exemple fixé sur une pièce de structure du véhicule 2 (il peut également être fixé au corps principal 6 en étant à distance de ce dernier). La distance entre le dispositif de projection d'images 12 et la face interne 10 peut être comprise entre 5 millimètres et 400 millimètres, de préférence entre 35 millimètres et 200 millimètres. Cette distance peut être déterminée par rapport à d'autres caractéristiques d'autres éléments de l'ensemble selon l'invention et qui seront décrits ultérieurement et concernant une source de lumière 14 du dispositif de projection d'image, un film diffusant 18 ou encore une couche de peinture du corps principal 6.

La distance entre le dispositif de projection d'images 12 et le corps principal 6 peut également permettre de placer le dispositif de projection d'images 12 hors d'atteinte du panneau de carrosserie 4 en cas de déformation de ce dernier due à un choc à faible vitesse (par exemple s'il s'agit d'un pare-chocs) et si le dispositif de projection d'images 12 est fixé à une pièce de structure du véhicule distante et non sujette à une déformation mécanique du panneau de carrosserie 4. Il est également possible de prévoir, de manière préférentielle, que le dispositif de projection d'images 12 soit fixé indirectement au panneau de carrosserie 4 de manière à pouvoir être déplacé conjointement à la déformation du panneau de carrosserie 4 tout en restant ainsi à distance de ce dernier et ce afin d'éviter d'endommager le dispositif de projection d'images 12 en cas de chocs au niveau du corps principal 6.

Le dispositif de projection d'images 12 peut être composé d'une source de lumière 14 comprenant des LED (en tout état de cause au moins une LED), configurée pour transmettre de la lumière en direction d'une lentille freeform 22. L'intensité lumineuse émise par la source de lumière est choisie notamment en fonction de la distance entre le dispositif de projection d'images 12 et le corps principal 6 et de la composition du panneau de carrosserie 4 afin d'obtenir le résultat souhaité. Le dispositif de projection d'images 12 est relié à une unité de contrôle électronique apte à commander la diffusion d'image 12.

La lentille freeform 22 permet quant à elle l'obtention d'une image précise grâce à un dispositif simple. En effet, la lentille freeform 22 est fabriquée sur mesure (i.e. modélisée pour obtenir le motif choisi sur la face externe 8 du panneau de carrosserie 4) après modélisation numérique de cette dernière, par exemple en matière plastique (de préférence en polycarbonate ou en polyméthacrylate de méthyle) et par injection, ce qui représente également un faible coût de fabrication.

Le principe général de l'invention est exposé sur les figures 2 à 4. Le dispositif de projection d'images 12 projette une image (premier faisceau lumineux dont la forme, dans cette section, est définie par les premières limites 24 et 26) qui atteint la face interne 10 du panneau de carrosserie 4. L'image 16 est visible à la surface du panneau de carrosserie 4.

Afin de pouvoir afficher l'image 16, le panneau de carrosserie 4, réalisé dans un matériau transparent, comprend au moins un élément en supplément de la matière plastique le composant, élément ajouté pendant ou après la fabrication du panneau de carrosserie 4.

A cet effet, le panneau de carrosserie 4 comprend un film diffusant 18 rapporté au corps principal 6 de manière à être traversé par l'image 16 projetée par le dispositif de projection d'images 12. Le film diffusant 18 peut être fixé, par exemple par adhésivage, sur une face interne (figure 4) ou sur une face externe 8 (figures 2 et 3) du corps principal 6. Alternativement, le corps principal 6 pourrait être surmoulé sur le film diffusant 18. Le film diffusant 18 permet une diffusion surfacique optimisant le résultat attendu. L'effet de ce dernier est visible sur les figures 2 à 4. La lumière en sortie du film diffusant 18 est diffusée de manière plus large qu'en entrée du film diffusant. La lumière diffusée en sortie du film diffusant 18 prend la forme d'un second faisceau lumineux élargi par rapport au premier faisceau.

Le film diffusant 18 peut être de préférence sérigraphié. Cela permet par exemple de colorer l'image 16 affichée sur le panneau de carrosserie 4 ou encore de rendre les bords de l'image 16 le plus net possible en sérigraphiant en noir une partie du film diffusant 18.

De préférence, la largeur à mi-hauteur (parfois indiquée comme LMH) du film diffusant 18 (ou plus souvent indiqué comme FWHM pour *«Full Width at High Maximum»)* est comprise entre 40° et 90°, de préférence entre 60° et 90°. On désigne par « largeur à mi-hauteur » l'angle d'ouverture du second faisceau lumineux dans lequel l'intensité lumineuse est au moins égale à la moitié de l'intensité maximale mesurée dans le faisceau, en général au centre du second faisceau lumineux. Dans l'exemple illustré et de manière préférentielle, la portion centrale du faisceau présentant cette largeur à mi-hauteur est située, de façon sensiblement homogène, autour de la direction normale au panneau, passant par le centre de l'image. Les limites de cet angle sont délimitées par les secondes limites 28 et 30 du second faisceau lumineux. En d'autres termes, et entre les secondes limites 28 et 30 du second faisceau lumineux, l'intensité lumineuse des rayons lumineux est égale à au moins la moitié de l'intensité maximale au centre du second faisceau lumineux. Des rayons lumineux sont encore perçus au-delà des secondes limites 28 et 30 du second faisceau mais leur intensité lumineuse est inférieure à la moitié de l'intensité maximale au centre du second faisceau lumineux.

L'intervalle de largeur à mi-hauteur mentionné ci-dessus permet une diffusion large de l'image 16 en sortie du panneau de carrosserie 4. Une diffusion large permet la meilleure visibilité de l'image 16 générée à la surface du panneau de carrosserie 4 pour un utilisateur, c'est-à-dire également pour un utilisateur ne se situant pas obligatoirement face au panneau de carrosserie 4. La transmission lumineuse du film diffusant 18 peut quant à elle être compris entre 40% et 98%, de préférence entre 60% et 95%.

Le film diffusant 18 permet dès lors une diffusion large de l'image 16 générée au moment du passage de la lumière au travers de la lentille freeform 22, la diffusion étant de préférence conique (i.e. permettant une diffusion uniforme de la lumière dans toutes les directions).

Le panneau de carrosserie 4 peut également être peint avec une peinture permettant l'affichage des images projetées sur sa face externe 8. La couche de peinture peut être réalisée sur une face externe du corps principal 6 (comme cela peut être le cas sur la figure 4, le film diffusant étant fixé sur une face interne du corps principal 6) ou être réalisée à la surface du film diffusant 18 lui-même fixé sur le corps principal 6 (comme cela peut être le cas sur la figure 3). Alternativement à la peinture, le corps principal 6 peut être recouvert, sur sa face interne ou sur sa face externe, de toute couche de finition (film décoratif, chromage, masquage etc.). Au moins une partie des couches de finition peut être conçue de manière à optimiser l'affichage de l'image 16 générée par le dispositif de projection d'images 12.

Par exemple, et comme cela est illustré sur les figures 3 et 4, la face externe du corps principal 6 peut être recouverte d'un primaire 32, d'une couche de peinture colorée 34 ainsi que d'un vernis 36.

Dans l'exemple illustré, le primaire 32 et le vernis 36 sont transparents. La couche de peinture colorée 34 est quant à elle optimisée pour obtenir un affichage de l'image 16 satisfaisant. Pour cela, la peinture colorée 34 peut présenter un facteur de Haze (correspondant au rapport de la quantité de lumière diffuse par rapport à la lumière transmise totale) compris entre 30% et 75%, de préférence sans dépasser 72%. La transmission lumineuse de la peinture colorée 34 est de préférence comprise entre 10% et 50%, de préférence comprise entre 20% et 40%, de préférence sensiblement égale à 30%.

Alternativement à la couche de peinture colorée 34 ou en complément de cette dernière, le primaire 32 et le vernis 36 pourrait être optimisés afin d'influer sur l'affichage de l'image 16 générée par le dispositif de projection d'images 12.

La peinture colorée 34 permet, de par sa coloration, que le panneau de carrosserie 4 soit d'aspect normal lorsqu'aucune image n'est projetée par le dispositif de projection d'images 12.

De manière plus générale, les caractéristiques mentionnées dans la présente description (distance entre le dispositif de projection d'images 12 et le corps principal 6, intensité lumineuse de la source de lumière 14, facteur de Haze de la peinture colorée 34, largeur à mi-hauteur du film diffusant 18) sont déterminées les unes en fonction des autres afin d'obtenir l'affichage d'une image la plus nette possible et la plus visible possible sur la surface externe 8 du panneau de carrosserie 4.

Par exemple, et pour afficher une image 16 telle que celle illustrée sur la figure 1 et ayant une hauteur et une largeur égales à 200 millimètres, on peut mettre en œuvre les caractéristiques suivantes :
- la distance entre le panneau de carrosserie 4 et la lentille freeform 22 est sensiblement égale à 80 millimètres,
- le corps principal est réalisé en polycarbonate transparent d'une épaisseur sensiblement égale à 3 millimètres,
- la largeur à mi-hauteur du film diffusant 18 est sensiblement égale à 70%, et
- la peinture colorée 34 a une transmission lumineuse sensiblement égale à 30% et son facteur de Haze est sensiblement égal à 50%.

### Liste de références

2 : véhicule automobile
4 : panneau de carrosserie
6 : corps principal
8 : face externe du panneau de carrosserie
10 : face interne du panneau de carrosserie
12 : dispositif de projection d'images
14 : source de lumière
16 : image
18 : film diffusant
22 : lentille freeform
24, 26 : premières limites du premier faisceau de lumière
28, 30 : secondes limites du second faisceau de lumière
32 : primaire
34 : peinture colorée
36 : vernis

## Revendications

1. Ensemble d'un panneau de carrosserie (4) de véhicule automobile (2) et d'un dispositif de projection d'images (12), le panneau de carrosserie (4) étant **caractérisé en ce qu'**il comprend :
- un corps principal (6) réalisé en matière plastique transparente, et
- un film diffusant (18) fixé au corps principal (6) de manière à être traversé par l'image projetée par le dispositif de projection d'images (12),
le dispositif de projection d'images (12) étant agencé pour faire apparaitre au moins une image (16) sur une face externe (8) du panneau de carrosserie (4) en la projetant sur une face interne (10) du panneau de carrosserie (4), le dispositif de projection d'images (12) comprenant une lentille freeform (22).

2. Ensemble selon la revendication 1, dans lequel le corps principal (6) est réalisé dans un matériau suivants : du Polycarbonate (PC), du Polyméthacrylate de Méthyle (PMMA), de l'Acrylonitrile Butadiène Styrène translucide (ABS), de l'Acrilonitrile Styrène Acrylate (ASA), du styrène acrilonitrile (SAN), un mélange d'Acrilonitrile Styrène Acrylate et de Polycarbonate, un mélange de Polycarbonate et de Polytéréphtalate d'Ethylène, ou encore de polyoléfine amorphe tels que cyclo-oléfines copolymères (COC) ou cyclo-oléfines-polymères (COP).

3. Ensemble selon l'une quelconque des revendications précédentes, dans lequel le dispositif de projection d'image (12) comprend une source de lumière (14) agencée pour projeter de la lumière à travers la lentille freeform (22).

4. Ensemble selon l'une quelconque des revendications précédentes, dans lequel la source de lumière (14) comprend au moins une LED.

5. Ensemble selon l'une quelconque des revendications précédentes, dans lequel la lentille freeform est réalisé en polycarbonate.

6. Ensemble selon l'une quelconque des revendications précédentes, dans lequel le film diffusant (18) présente une largeur à mi-hauteur comprise entre 40° et 90°, de préférence entre 60° et 90°.

7. Ensemble selon l'une quelconque des revendications précédentes, dans lequel le film diffusant (18) est fixé par adhésivage sur le corps principal (6) du panneau de carrosserie (4).

8. Ensemble selon l'une quelconque des revendications précédentes, dans lequel la distance entre le corps principal (6) et le dispositif de projection d'images (12) est comprise entre 5 millimètres et 400 millimètres, de préférence entre 35 millimètres et 200 millimètres.

9. Ensemble selon l'une quelconque des revendications précédentes, dans lequel le corps principal (6) est recouverte d'un primaire (32), d'une couche de peinture colorée (34) et d'un vernis (36).

10. Ensemble selon la revendication précédente, dans lequel le primaire (32) et le vernis (36) sont transparents.

11. Ensemble selon l'une des revendications 9 ou 10, dans lequel la peinture colorée (34) présente un facteur de Haze compris entre 30% et 75%.

12. Ensemble selon l'une des revendications 9 à 11, dans lequel la peinture colorée (34) présente une transmission lumineuse comprise entre 10% et 50%, de préférence comprise entre 20% et 40%, de préférence sensiblement égale à 30%.

13. Ensemble selon l'une quelconque des revendications précédentes, dans lequel le film diffusant (18) est au moins partiellement sérigraphié

## Patentansprüche

1. Anordnung aus einer Karosseriepaneele (4) eines Kraftfahrzeugs (2) und einer Bildprojektionsvorrichtung (12), wobei die Karosseriepaneele (4) **dadurch gekennzeichnet ist, dass** sie Folgendes aufweist:
- einen Hauptkörper (6) aus transparentem Kunststoff, und
- eine streuende Folie (18), die am Hauptkörper (6) so befestigt ist, dass sie von dem durch die Bildprojektionsvorrichtung (12) projizierten Bild durchquert wird,
wobei die Bildprojektionsvorrichtung (12) so angeordnet ist, dass sie mindestens ein Bild (16) auf einer Außenseite (8) der Karosseriepaneele (4) erscheinen lässt, indem sie es auf eine Innenseite (10) der Karosseriepaneele (4) projiziert, wobei die Bildprojektionsvorrichtung (12) eine Freiformlinse (22) aufweist.

2. Anordnung nach Anspruch 1, wobei der Hauptkörper (6) aus einem der folgenden Materialien hergestellt ist: Polycarbonat (PC), Polymethylmethacrylat (PMMA), transluzentem Acrylnitril-Butadien-Styrol (ABS), Acrylnitril-Styrol-Acrylat (ASA), Styrol-Acrylnitril (SAN), eine Mischung aus Acrylnitril-Styrol-Acrylat und Polycarbonat, eine Mischung aus Polycarbonat und Polyethylenterephthalat oder auch amorphe Polyolefine wie Cycloolefin-Copolymere (COC) oder Cycloolefin-Polymere (COP).

3. Anordnung nach einem der vorhergehenden Ansprüche, wobei die Bildprojektionsvorrichtung (12) eine Lichtquelle (14) aufweist, die so angeordnet ist, dass sie Licht durch die Freiformlinse (22) projiziert.

4. Anordnung nach einem der vorhergehenden Ansprüche, wobei die Lichtquelle (14) mindestens eine LED aufweist.

5. Anordnung nach einem der vorhergehenden Ansprüche, wobei die Freiformlinse aus Polycarbonat hergestellt ist.

6. Anordnung nach einem der vorhergehenden Ansprüche, wobei die streuende Folie (18) eine Halbwertsbreite zwischen 40° und 90°, vorzugsweise zwischen 60° und 90°, aufweist.

7. Anordnung nach einem der vorhergehenden Ansprüche, wobei die streuende Folie (18) durch Kleben am Hauptkörper (6) der Karosseriepaneele (4) befestigt ist.

8. Anordnung nach einem der vorhergehenden Ansprüche, wobei der Abstand zwischen dem Hauptkörper (6) und der Bildprojektionsvorrichtung (12) zwischen 5 Millimetern und 400 Millimetern, vorzugsweise zwischen 35 Millimetern und 200 Millimetern, liegt.

9. Anordnung nach einem der vorhergehenden Ansprüche, wobei der Hauptkörper (6) mit einem Primer (32), einer farbigen Beschichtung (34) und einem Lack (36) beschichtet ist.

10. Anordnung nach dem vorhergehenden Anspruch, wobei der Primer (32) und der Lack (36) transparent sind.

11. Anordnung nach einem der Ansprüche 9 oder 10, wobei die farbige Beschichtung (34) einen Haze-Faktor zwischen 30% und 75% aufweist.

12. Anordnung nach einem der Ansprüche 9 bis 11, wobei die farbige Beschichtung (34) eine Lichtdurchlässigkeit zwischen 10 % und 50 %, vorzugsweise zwischen 20 % und 40 %, besonders bevorzugt im Wesentlichen 30 %, aufweist.

13. Anordnung nach einem der vorhergehenden Ansprüche, wobei die streuende Folie (18) zumindest teilweise mit Siebdruck versehen ist.

## Claims

1. Assembly of a body panel (4) of a motor vehicle (2) and an image projection device (12), the body panel (4) being **characterized in that** it comprises:
- a main body (6) made of transparent plastic, and
- a diffusing film (18) attached to the main body (6) so as to be traversed by the image projected by the image projection device (12),
wherein the image projection device (12) is arranged to display at least one image (16) on an external face (8) of the body panel (4) by projecting it onto an internal face (10) of the body panel (4), the image projection device (12) comprising a freeform lens (22).

2. Assembly according to claim 1, wherein the main body (6) is made of the following material: Polycarbonate (PC), Polymethyl Methacrylate (PMMA), translucent Acrylonitrile Butadiene Styrene (ABS), Acrilonitrile Styrene Acrylate (ASA), Acrilonitrile Styrene (SAN), a mixture of Acrilonitrile Styrene Acrylate and Polycarbonate, a mixture of Polycarbonate and Polyethylene Terephthalate, or amorphous polyolefins such as cyclo-olefin copolymers (COCs) or cyclo-olefins-polymers (COP).

3. Assembly according to any of the preceding claims, wherein the image projection device (12) comprises a light source (14) arranged to project light through the freeform lens (22).

4. Assembly according to any of the preceding claims, wherein the light source (14) comprises at least one LED.

5. Assembly according to any of the preceding claims, wherein the freeform lens is made of polycarbonate.

6. Assembly according to any of the preceding claims, wherein the diffusing film (18) has a half-height width of between 40° and 90°, preferably between 60° and 90°.

7. Assembly according to any of the preceding claims, wherein the diffusing film (18) is fixed by adhesive to the main body (6) of the body panel (4).

8. Assembly according to any of the preceding claims, wherein the distance between the main body (6) and the image projection device (12) is comprised between 5 mm and 400 mm, preferably between 35 mm and 200 mm.

9. Assembly according to any of the preceding claims, wherein the main body (6) is covered with a primer (32), a layer of coloured paint (34) and a varnish (36).

10. Assembly according to the preceding claim, wherein the primer (32) and the varnish (36) are transparent.

11. Assembly according to one of claims 9 or 10, wherein the coloured paint (34) has a Haze factor of between 30% and 75%.

12. Assembly according to one of claims 9 to 11, wherein the coloured paint (34) has a light transmission of between 10% and 50%, preferably between 20% and 40%, preferably substantially equal to 30%.

13. Assembly according to any one of the preceding claims, wherein the diffusing film (18) is at least partially silk-screened
